# EUROPEAN PATENT APPLICATION

(11) **EP 4 818 347 A1**
(43) Date of publication of application: **07.10.2026**
(21) Application number: 24897720.9
(22) Date of filing: 02.12.2024
(51) Int. Cl.: C22C 38/00, C22C 38/58, C22C 38/60

(54) **WELD METAL, WELD JOINT, AND WELD STRUCTURE**

(30) Priority: 01.12.2023 JP 2023204166
(71) Applicant: Nippon Steel Corporation, Tokyo 100-8071 (JP)
(72) Inventor: TACHIBANA, Hayato, Tokyo 100-8071 (JP); MATSUO, Hajime, Tokyo 100-8071 (JP); KAMO, Takahiro, Tokyo 100-8071 (JP)
(74) Representative: Vossius & Partner Patentanwälte Rechtsanwälte mbB
(86) International application number: PCT/JP2024/042593
(87) International publication number: WO 2025/116039

(57) **Abstract**

A weld metal containing chemical components of, in terms of mass% relative to the total mass of the weld metal, C: 0.2 to 0.8%, Si: 0.03 to 0.5%, Mn: 5.1 to 20%, P: 0 to 0.05%, S: 0 to 0.05%, Cu: 0 to 5%, Ni: 6 to 20%, Cr: 0 to 10%, Mo: 0 to 10%, Nb: 0 to 5%, V: 0 to 5%, Ta: 0 to 5%, Hf: 0 to 5%, Ti: 0 to 5%, Zr: 0 to 5%, Co: 0 to 1%, Pb: 0 to 1%, Sn: 0 to 1%, W: 0 to 5%, Mg: 0 to 0.1 %, Al: 0.001 to 0.1%, Ca: 0 to 5%, B: 0 to 0.5%, REMs: 0 to 0.5%, N: 0 to 0.5%, O: 0.001 to 0.15%, and balance being Fe and impurities, wherein at least one element selected from the group consisting of Nb, V, Ta, Hf, Ti, and Zr is included in the following amounts: Nb: more than 1.00%, V: more than 1.00%, Ta: 0.001% or more, Hf: 0.001% or more, Ti: more than 0.10%, and Zr: more than 0.500%.

## Description

### Technical Field

The present disclosure relates to a weld metal, a welded joint, and a welded structure.

### Background Art

These days, due to the tightening of carbon dioxide emission regulations based on the problem of global warming, demand for hydrogen fuel, which emits no carbon dioxide as compared to petroleum, coal, etc., natural gas, which emits less carbon dioxide, and the like is increasing. Along with this, also demand for construction of liquid hydrogen tanks, liquid carbon dioxide tanks, LNG tanks, and the like used in ships, on the ground, etc. is increasing worldwide. For steel materials used for liquid hydrogen tanks, liquid carbon dioxide tanks, LNG tanks, and the like, a variety of Ni-based low-temperature steel containing 6 to 9% Ni is used according to the request of securing of toughness at very low temperature (for example, - 196°C).

For welding of the variety of Ni-based low-temperature steel, a weld metal is formed by performing welding using an austenitic welding material from which a weld metal having excellent low-temperature toughness can be obtained. This welding material is designed mainly with a Ni content of 70%.

For example, as a welding material having a Ni content of 70%, Patent Literature 1 discloses "A flux-cored wire containing a Ni-based alloy as an outer sheath, in which the Ni content is 35 to 70%, the flux contains TiO₂, SiO₂, and ZrO₂ in a total amount of 4.0 mass% or more relative to the total mass of the wire and further contains Mn oxides at 0.6 to 1.2 mass% in terms of MnO₂, and when the content amounts in mass% of TiO₂, SiO₂, ZrO₂, and MnO₂ (converted amount) are denoted by [TiO₂], [SiO₂], [ZrO₂], and [MnO₂], respectively, [TiO₂]/[ZrO₂] is 2.3 to 3.3, [SiO₂]/[ZrO₂] is 0.9 to 1.5, and ([TiO₂] + [SiO₂] + [ZrO₂])/[MnO₂] is 5 to 13.".

### Prior Art Literature

### Patent Literature

Patent Literature 1: Japanese Patent Application Laid-Open (JP-A) No. 2008-246507

### SUMMARY OF INVENTION

### Technical Problem

As described above, an austenitic welding material has conventionally been used as a welding material from which a weld metal excellent in low-temperature toughness can be obtained. However, the austenitic welding material has a characteristic that hot cracking is likely to occur. Thus, a weld metal in which the occurrence of hot cracking is suppressed is desired.

An issue of the present disclosure is to provide a weld metal in which the occurrence of hot cracking is suppressed, a welded joint including the weld metal, and a welded structure including the welded joint.

### Solution to Problem

Means for solving the issue include the following aspects.
<1>
   A weld metal comprising chemical components of, in terms of mass% relative to a total mass of the weld metal:
   C: from 0.20 to 0.80%,
   Si: from 0.03 to 0.50%,
   Mn: from 5.1 to 20.0%,
   P: from 0 to 0.050%,
   S: from 0 to 0.050%,
   Cu: from 0 to 5.0%,
   Ni: from 6.0 to 20.0%,
   Cr: from 0 to 10.0%,
   Mo: from 0 to 10.0%,
   Nb: from 0 to 5.00%,
   V: from 0 to 5.00%,
   Ta: from 0 to 5.000%,
   Hf: from 0 to 5.000%,
   Ti: from 0 to 5.00%,
   Zr: from 0 to 5.000%,
   Co: from 0 to 1.0%,
   Pb: from 0 to 1.0%,
   Sn: from 0 to 1.0%,
   W: from 0 to 5.0%,
   Mg: from 0 to 0.10%,
   Al: from 0.001 to 0.100%,
   Ca: from 0 to 5.00%,
   B: from 0 to 0.500%,
   REMs: from 0 to 0.500%,
   N: from 0 to 0.500%,
   O: from 0.001 to 0.150%, and
   a balance being Fe and impurities,
   wherein at least one element selected from the group consisting of Nb, V, Ta, Hf, Ti, and Zr is included in the following content amounts:
      Nb: more than 1.00%,
      V: more than 1.00%,
      Ta: 0.001 % or more,
      Hf: 0.001 % or more,
      Ti: more than 0.10%, and
      Zr: more than 0.500%.
<2>
   The weld metal according to <1>, wherein a mass ratio of a content amount of the Mn and a content amount of the Ni (Ni/Mn) is 0.33 or more.
<3>
   The weld metal according to <1> or <2>, wherein at least two elements selected from the group consisting of Nb, V, Ta, Hf, Ti, and Zr are included in the respective content amounts.
<4>
   The weld metal according to any one of <1> to <3>, wherein an fcc content ratio determined by a magnetic induction method is 70 vol% or more.
<5>
   A welded joint comprising the weld metal according to any one of <1> to <4>.
<6>
   A welded structure comprising the welded joint according to <5>.

### Advantageous Effects of Invention

According to the present disclosure, a weld metal in which the occurrence of hot cracking is suppressed, a welded joint including the weld metal, and a welded structure including the welded joint are provided.

### BRIEF DESCRIPTION OF DRAWINGS

Fig. 1 is a schematic cross-sectional view showing base metals each having a groove that were used in Examples.
Fig. 2A is a schematic cross-sectional view for describing a testing device for a FISCO cracking test.
Fig. 2B is a schematic cross-sectional view for describing the testing device for a FISCO cracking test.
Fig. 2C is a schematic cross-sectional view showing a welded joint sample for describing hot cracking occurring in a weld metal portion in a FISCO cracking test.

### DESCRIPTION OF EMBODIMENTS

An embodiment that is an example of the present disclosure will now be described.

In the present specification, a numerical range indicated using "to" means, in the case where neither "more than" nor "less than" is added to the numerical value written before or after "to", a range including these numerical values as the lower limit value and the upper limit value, respectively. Further, a numerical range in the case where "more than" or "less than" is added to the numerical value written before or after "to" means a range not including the numerical value as the lower limit value or the upper limit value.

In numerical ranges specified in a stepwise manner in the present specification, the upper limit value of a stepwise numerical range may be replaced with the upper limit value of another numerical range specified in a stepwise manner, or may be replaced with a value shown in Examples. Further, the lower limit value of a stepwise numerical range may be replaced with the lower limit value of another numerical range specified in a stepwise manner, or may be replaced with a value shown in Examples.

For the content amount, "%" means "mass%".

The expression of "0 to" as a content amount (%) means that the component is an optional component and may not be contained.

### <Weld Metal>

A weld metal according to an embodiment of the present disclosure has a predetermined composition of chemical components, and contains at least one element selected from the group consisting of Nb, V, Ta, Hf, Ti, and Zr in content amounts described later.

In the weld metal according to the present disclosure, the occurrence of hot cracking is suppressed by the above constitution.

Conventionally, an austenitic welding material has been used as a welding material from which a weld metal excellent in low-temperature toughness can be obtained; for example, an austenitic welding material is used for steel containing 6 to 9% Ni used for LNG tanks, or the like. However, the austenitic welding material has a characteristic that hot cracking is likely to occur. This is presumed to be because, in the austenitic welding material, solidification occurs in the γ phase (a face-centered cubic lattice, fcc), therefore severe solidification segregation of P, S, C, Si, etc. occurs, consequently the melting point of the liquid phase during the time of (γ phase + liquid phase) decreases, thus tensile stress due to solidification shrinkage is applied to the liquid phase, and hot cracking occurs.

In this regard, the present inventors have focused attention on crystallization of carbides in the liquid phase as a method for increasing the melting point of the liquid phase during solidification. Due to the fact that solidification segregation occurs with the progress of solidification in the weld metal, the melting point of the liquid phase can be decreased. P, S, C, and Si are concentrated in this liquid phase, and the C concentration in the liquid phase can be greatly reduced by crystallizing carbides in the liquid phase. It is presumed that as a result the melting point of the liquid phase is increased and hot cracking is suppressed.

Thus, the weld metal according to the embodiment of the present disclosure is designed to have a constitution in which at least one element selected from the group consisting of Ti, Zr, V, Hf, Nb, and Ta, which are elements likely to form carbides, is contained in respective predetermined content amounts. By the weld metal containing at least one element selected from the group consisting of Ti, Zr, V, Hf, Nb, and Ta in predetermined amounts, the C concentration in the liquid phase is reduced by crystallization of carbides, the melting point of the liquid phase is increased, and hot cracking is suppressed.

As an index of hot cracking, a FISCO cracking test provided by JIS Z 3155 (1993) is given; in the weld metal according to the embodiment of the present disclosure, the cracking rate in the FISCO cracking test is preferably 15% or less.

The reasons for limitation of requirements (requirements including optional requirements) constituting the weld metal according to the present disclosure will now be specifically described.

### (Chemical Components of the Weld Metal)

The chemical components of the weld metal will now be described in detail.

In the description of the chemical components of the weld metal, "%" means "mass% relative to the total mass of the weld metal" unless otherwise specified.

The chemical components of the weld metal are
C: from 0.20 to 0.80%,
Si: from 0.03 to 0.50%,
Mn: from 5.1 to 20.0%,
P: from 0 to 0.050%,
S: from 0 to 0.050%,
Cu: from 0 to 5.0%,
Ni: from 6.0 to 20.0%,
Cr: from 0 to 10.0%,
Mo: from 0 to 10.0%,
Nb: from 0 to 5.00%,
V: from 0 to 5.00%,
Ta: from 0 to 5.000%,
Hf: from 0 to 5.000%,
Ti: from 0 to 5.00%,
Zr: from 0 to 5.000%,
Co: from 0 to 1.0%,
Pb: from 0 to 1.0%,
Sn: from 0 to 1.0%,
W: from 0 to 5.0%,
Mg: from 0 to 0.10%,
Al: from 0.001 to 0.100%,
Ca: from 0 to 5.00%,
B: from 0 to 0.500%,
REMs: from 0 to 0.500%,
N: from 0 to 0.500%,
O: from 0.001 to 0.150%, and
a balance being Fe and impurities,
wherein at least one element selected from the group consisting of Nb, V, Ta, Hf, Ti, and Zr is included in the following content amounts:
   Nb: more than 1.00%,
   V: more than 1.00%,
   Ta: 0.001% or more,
   Hf: 0.001% or more,
   Ti: more than 0.10%, and
   Zr: more than 0.500%.

### (C: 0.20 to 0.80%)

C is an element that improves the strength of the weld metal, and is an element for securing strength of the weld metal.

On the other hand, when the C content of the weld metal is excessive, the influence of deterioration of toughness due to increase in the strength of the weld metal is large, and the low-temperature toughness of the weld metal is reduced.

Thus, the C content of the weld metal is set to 0.20 to 0.80%.

The lower limit of the C content of the weld metal may be preferably 0.22%, 0.25%, 0.27%, 0.30%, 0.32%, 0.35%, 0.37%, or 0.40%.

The upper limit of the C content of the weld metal is preferably 0.75%, 0.70%, 0.65%, 0.60%, 0.55%, or 0.50%.

### (Si: 0.03 to 0.50%)

Si is a deoxidizing element. When the Si content of the weld metal is too low, the O content of the weld metal is increased.

On the other hand, Si has low solid solubility in the austenite phase, and the larger the content amount of Si is, the more it is likely that solidification segregation will occur and hot cracking will occur.

Thus, the Si content of the weld metal is set to 0.03 to 0.50%.

The lower limit of the Si content of the weld metal is preferably 0.04%, 0.05% or 0.08%.

The upper limit of the Si content of the weld metal is preferably 0.48%, 0.45%, 0.40%, 0.35%, 0.30%, or 0.20%.

### (Mn: 5.1 to 20.0%)

Mn is an austenite stabilizing element. When the Mn content of the weld metal is too low, austenitization of the weld metal proceeds less easily, and low-temperature toughness deteriorates. Further, Mn is an element that functions as a deoxidizing agent to improve the cleanliness of the weld metal. Further, Mn is an element that forms MnS to make S in the weld metal harmless and improves the low-temperature toughness of the weld metal. In addition, Mn has an effect of preventing hot cracking.

On the other hand, when the Mn content of the weld metal is excessive, segregation is likely to occur in the weld metal, and significant embrittlement occurs in the segregation portion.

Thus, the Mn content of the weld metal is set to 5.1 to 20.0%.

The lower limit of the Mn content of the weld metal is preferably 5.5%, 5.7%, 6.0%, 7.0%, 8.0%, 9.0%, or 10.0%.

The upper limit of the Mn content of the weld metal is preferably 19.0%, 18.0%, 17.0%, 15.0%, or 14.5%.

### (P: 0 to 0.050%)

P is an impurity element, and promotes hot cracking or reduces toughness; therefore, it is preferable to reduce the P content of the weld metal as much as possible. Thus, the lower limit of the P content of the weld metal is set to 0%. However, from the viewpoint of reducing the P removal cost, the P content of the weld metal is preferably 0.003% or more.

On the other hand, when the P content of the weld metal is 0.050% or less, the bad influence of P falls within an acceptable range.

Thus, the P content of the weld metal is set to 0 to 0.050%.

In order to effectively suppress hot cracking or reduction in toughness, the P content of the weld metal is preferably 0.040% or less, 0.030% or less, 0.020% or less, 0.015% or less, or 0.010% or less.

### (S: 0 to 0.050%)

S is an impurity element, and promotes hot cracking or reduces toughness; therefore, it is preferable to reduce the S content of the weld metal as much as possible. Thus, the lower limit of the S content of the weld metal is set to 0%. However, from the viewpoint of reducing the S removal cost, the S content of the weld metal is preferably 0.003% or more.

On the other hand, when the S content of the weld metal is 0.050% or less, the bad influence of S on toughness falls within an acceptable range.

Thus, the S content of the weld metal is set to 0 to 0.050%.

In order to effectively suppress hot cracking or reduction in toughness, the S content of the weld metal is preferably 0.040% or less, 0.030% or less, 0.020% or less, 0.015% or less, or 0.010% or less.

### (Cu: 0 to 5.0%)

Cu is a precipitation strengthening element, and may be incorporated into the weld metal in order to improve the strength of the weld metal. Further, Cu is an austenite stabilizing element, and may be incorporated into the weld metal in order to improve the low-temperature toughness of the weld metal.

On the other hand, when the Cu content of the weld metal is excessive, the above effects come to saturation.

Thus, the Cu content of the weld metal is set to 0 to 5.0%.

The lower limit of the Cu content of the weld metal is preferably 0.3%, 0.5%, or 0.7%.

The upper limit of the Cu content of the weld metal is preferably 4.5%, 4.0%, or 3.5%.

### (Ni: 6.0 to 20.0%)

Ni is an austenite stabilizing element. When the Ni content of the weld metal is too low, austenitization of the weld metal proceeds less easily, and low-temperature toughness deteriorates.

On the other hand, when the Ni content of the weld metal is increased, the cost of the weld metal is increased.

Thus, the Ni content of the weld metal is set to 6.0 to 20.0%.

The lower limit of the Ni content of the weld metal is preferably 6.5%, 7.0%, 7.5%, or 8.0%.

The upper limit of the Ni content of the weld metal is preferably 19.0%, 17.0%, 15.0%, or 13.0%.

### (Cr: 0 to 10.0%)

Cr is an austenite stabilizing element, and may be incorporated into the weld metal in order to improve the low-temperature toughness of the weld metal.

On the other hand, when the Cr content of the weld metal is excessive, the solid-liquid coexistence temperature range of the molten metal is expanded, and therefore hot cracking is likely to occur.

Thus, the Cr content of the weld metal is set to 0 to 10.0%.

The lower limit of the Cr content of the weld metal is preferably 1.0%, 2.0%, or 3.0%.

The upper limit of the Cr content of the weld metal is preferably 9.0%, 8.0%, or 7.0%.

### (Mo: 0 to 10.0%)

Mo is a precipitation strengthening element, and may be incorporated into the weld metal in order to improve the strength of the weld metal.

On the other hand, when the Mo content of the weld metal is excessive, the strength of the weld metal is excessive, and low-temperature toughness is reduced.

Thus, the Mo content of the weld metal is set to 0 to 10.0%.

The lower limit of the Mo content of the weld metal is preferably 1.0%, 2.0%, or 3.0%.

The upper limit of the Mo content of the weld metal is preferably 9.0%, 8.0%, or 7.0%.

### (Nb: 0 to 5.00%)

Nb is an element that forms carbides in the weld metal to increase the strength of the weld metal, and thus may be incorporated into the weld metal.

On the other hand, when Nb content of the weld metal is excessive, there is a concern that hot cracking of the weld metal will occur.

Thus, Nb content of the weld metal is set to 0 to 5.00%.

The lower limit of Nb content of the weld metal is preferably 0.01%, 0.05%, 0.10%, 0.15%, or 0.20%.

The upper limit of Nb content of the weld metal is preferably 4.50%, 4.00%, 3.50%, 3.00%, or 2.50%.

In the case where, for the purpose of suppressing hot cracking, Nb is added in order to crystallize carbides in the liquid phase to reduce the C concentration in the liquid phase, the lower limit of Nb content of the weld metal is preferably in the range described later.

### (V: 0 to 5.00%)

V is an element that forms carbonitrides in the weld metal and increases the strength of the weld metal, and thus may be incorporated into the weld metal.

On the other hand, when V content of the weld metal is excessive, hot cracking of the weld metal may occur.

Thus, V content of the weld metal is set to 0 to 5.00%.

The lower limit of V content of the weld metal is preferably 0.01%, 0.05%, 0.10%, 0.15%, or 0.20%.

The upper limit of V content of the weld metal is preferably 4.50%, 4.00%, 3.50%, or 3.00%.

In the case where, for the purpose of suppressing hot cracking, V is added in order to crystallize carbides in the liquid phase to reduce the C concentration in the liquid phase, the lower limit of V content of the weld metal is preferably in the range described later.

### (Ta: 0 to 5.000%)

Ta is an element that forms carbides in the weld metal to increase the strength of the weld metal, and thus may be incorporated into the weld metal.

On the other hand, when Ta content of the weld metal is excessive, carbonitrides are precipitated in large amounts and in a coarse manner, and the toughness of the weld metal may rather be reduced.

Thus, Ta content of the weld metal is set to 0 to 5.000%.

The lower limit of Ta content of the weld metal is preferably 0.001%, 0.003%, 0.005%, 0.010%, 0.020%, 0.030%, or 0.050%.

The upper limit of Ta content of the weld metal is preferably 4.500%, 4.000%, 3.500%, 3.000%, 2.000%, 1.000%, 0.500%, 0.200%, or 0.100%.

In the case where, for the purpose of suppressing hot cracking, Ta is added in order to crystallize carbides in the liquid phase to reduce the C concentration in the liquid phase, the lower limit of Ta content of the weld metal is preferably in the range described later.

### (Hf: 0 to 5.000%)

Hf is an element that forms carbides in the weld metal to increase the strength of the weld metal, and thus may be incorporated into the weld metal.

On the other hand, when Hf content of the weld metal is excessive, the toughness of the weld metal may be reduced.

Thus, Hf content of the weld metal is set to 0 to 5.000%.

The lower limit of Hf content of the weld metal is preferably 0.001 %, 0.002%, 0.005%, 0.010%, 0.020%, 0.030%, or 0.040%.

The upper limit of Hf content of the weld metal is preferably 4.500%, 4.000%, 3.500%, 3.000%, 2.000%, 1.000%, 0.500%, 0.200%, or 0.100%.

In the case where, for the purpose of suppressing hot cracking, Hf is added in order to crystallize carbides in the liquid phase to reduce the C concentration in the liquid phase, the lower limit of Hf content of the weld metal is preferably in the range described later.

### (Ti: 0 to 5.00%)

Ti is a deoxidizing element, and may be incorporated into the weld metal in order to suppress welding defects and improve the cleanliness of the weld metal.

On the other hand, when Ti content of the weld metal is excessive, carbides are produced in the weld metal, and the toughness of the weld metal may deteriorate.

Thus, Ti content of the weld metal is set to 0 to 5.00%.

The lower limit of Ti content of the weld metal is preferably 0.003%, 0.01%, 0.02%, or 0.03%.

The upper limit of Ti content of the weld metal is preferably 4.50%, 4.00%, 3.50%, 3.00%, 2.00%, or 1.50%.

In the case where, for the purpose of suppressing hot cracking, Ti is added in order to crystallize carbides in the liquid phase to reduce the C concentration in the liquid phase, the lower limit of Ti content of the weld metal is preferably in the range described later.

### (Zr: 0 to 5.000%)

Zr can stabilize the bead shape during welding work for obtaining the weld metal, and thus may be incorporated into the weld metal.

On the other hand, when Zr content of the weld metal is excessive, the amount of oxygen of the weld metal is increased, and low-temperature toughness may deteriorate.

Thus, Zr content of the weld metal is set to 0 to 5.000%.

The lower limit of Zr content of the weld metal is preferably 0.003%, 0.01%, 0.02%, or 0.03%.

The upper limit of Zr content of the weld metal is preferably 4.50%, 4.00%, 3.50%, 3.00%, 2.00%, 1.50%, or 1.00%.

In the case where, for the purpose of suppressing hot cracking, Zr is added in order to crystallize carbides in the liquid phase to reduce the C concentration in the liquid phase, the lower limit of Zr content of the weld metal is preferably in the range described later.

### (Co: 0 to 1.0%)

Co is an element that increases the strength of the weld metal by solid-solution strengthening, and thus may be incorporated into the weld metal.

On the other hand, when the Co content of the weld metal is excessive, the ductility of the weld metal is reduced, and toughness cannot be secured.

Thus, the Co content of the weld metal is set to 0 to 1.0%.

The lower limit of the Co content of the weld metal is preferably 0.01%, 0.05%, 0.1%, 0.15%, or 0.2%.

The upper limit of the Co content of the weld metal is preferably 0.95%, 0.9%, 0.85%, or 0.8%.

### (Pb: 0 to 1.0%)

Pb has an effect of improving toe formability between a steel material that is a base metal and the weld metal and improving the cutting nature of the weld metal, and thus may be incorporated into the weld metal.

On the other hand, when the Pb content of the weld metal is excessive, hot cracking occurs.

Thus, the Pb content of the weld metal is set to 0 to 1.0%.

The lower limit of the Pb content of the weld metal is preferably 0.01%, 0.05%, 0.1%, 0.15%, or 0.2%.

The upper limit of the Pb content of the weld metal is preferably 0.95%, 0.9%, 0.85%, or 0.8%.

### (Sn: 0 to 1.0%)

Sn is an element that improves the corrosion resistance of the weld metal, and thus may be incorporated into the weld metal.

On the other hand, when the Sn content of the weld metal is excessive, there is a concern that cracking will occur in the weld metal.

Thus, the Sn content of the weld metal is set to 0 to 1.0%.

The lower limit of the Sn content of the weld metal is preferably 0.01%, 0.05%, 0.1%, 0.15%, or 0.2%.

The upper limit of the Sn content of the weld metal is preferably 0.95%, 0.9%, 0.85%, or 0.8%.

### (W: 0 to 5.0%)

W is a solid-solution strengthening element, and may be incorporated into the weld metal in order to improve strength.

On the other hand, when the W content of the weld metal is excessive, the strength of the weld metal may be excessive, and toughness may be reduced.

Thus, the W content of the weld metal is set to 0 to 5.0%.

The lower limit of the W content of the weld metal is preferably 0.1%, 0.2%, 0.5%, 0.8%, or 1.0%.

The upper limit of the W content of the weld metal is preferably 4.8%, 4.5%, 4.3%, or 4.0%.

### (Mg: 0 to 0.10%)

Mg is a deoxidizing element and has an effect of reducing the amount of oxygen to improve toughness, and thus may be incorporated into the weld metal.

On the other hand, when the Mg content of the weld metal is excessive, the arc is unstabilized during welding work for obtaining the weld metal, the numbers of spatters and blowholes are increased, and welding workability deteriorates.

Thus, the Mg content of the weld metal is set to 0 to 0.10%.

The lower limit of the Mg content of the weld metal is preferably 0.005%, 0.01%, 0.02%, 0.03%, or 0.04%.

The upper limit of the Mg content of the weld metal is preferably 0.09%, 0.08%, 0.07%, or 0.06%.

### (Al: 0.001 to 0.100%)

Al is a deoxidizing element, and is incorporated into the weld metal in order to suppress welding defects and improve the cleanliness of the weld metal.

On the other hand, when the Al content of the weld metal is excessive, Al may form a nitride or an oxide in the weld metal, and the low-temperature toughness of the weld metal may be reduced.

Thus, the Al content of the weld metal is set to 0.001 to 0.100%.

The lower limit of the Al content of the weld metal is preferably 0.003%, 0.005%, 0.010%, 0.020%, or 0.030%.

The upper limit of the Al content of the weld metal is preferably 0.090%, 0.080%, or 0.070%.

### (Ca: 0 to 5.00%)

Ca has a function of changing the construction of sulfides in the weld metal and reducing the sizes of sulfides and oxides in the weld metal, and is therefore effective to improve the ductility and toughness of the weld metal. Thus, Ca may be incorporated into the weld metal.

On the other hand, when the Ca content of the weld metal is excessive, sulfides and oxides may be coarsened, and the low-temperature toughness of the weld metal may deteriorates.

Thus, the Ca content of the weld metal is set to 0 to 5.00%.

The lower limit of the Ca content of the weld metal is preferably 0.01%, 0.02%, or 0.03%.

The upper limit of the Ca content of the weld metal is preferably 4.8%, 4.5%, 4.3%, 4.0%, 3.0%, 2.0%, 1.0%, or 0.5%.

### (B: 0 to 0.500%)

B is an austenite stabilizing element and is also an interstitial solid-solution strengthening element, and may be incorporated into the weld metal in order to improve the low-temperature toughness and strength of the weld metal.

On the other hand, when the B content of the weld metal is excessive, M₂₃(C, B)₆ is precipitated, and this causes toughness deterioration.

Thus, the B content of the weld metal is set to 0 to 0.5000%.

The lower limit of the B content of the weld metal is preferably 0.0005%, 0.001%, or 0.002%.

The upper limit of the B content of the weld metal is preferably 0.480%, 0.450%, 0.430%, 0.400%, 0.300%, 0.200%, 0.100%, or 0.050%.

### (REMs: 0 to 0.500%)

REMs (Rare Earth Metals) are elements that stabilize the arc during welding work for obtaining the weld metal, and thus may be incorporated into the weld metal.

On the other hand, when the REMs content of the weld metal is excessive, spattering may be severe during welding work for obtaining the weld metal, and welding workability may be poor.

Thus, the REMs content of the weld metal is set to 0 to 0.500%.

The lower limit of the REMs content of the weld metal is preferably 0.001%, 0.002%, or 0.005%.

The upper limit of the REMs content of the weld metal is preferably 0.480%, 0.450%, 0.430%, 0.400%, 0.300%, 0.200%, 0.100%, or 0.050%.

### (N: 0 to 0.500%)

N is an austenite stabilizing element and is also an interstitial solid-solution strengthening element, and may be incorporated into the weld metal in order to improve the low-temperature toughness and strength of the weld metal.

On the other hand, when the N content of the weld metal is excessive, the level of blowing is increased, and this causes welding defects.

Thus, the N content of the weld metal is set to 0 to 0.500%.

The lower limit of the N content of the weld metal is preferably 0.001%, 0.005%, 0.010%, 0.020%, or 0.050%.

The upper limit of the N content of the weld metal is preferably 0.450%, 0.400%, 0.350%, 0.300%, 0.200%, or 0.100%.

### (O: 0.001 to 0.150%)

O is contained in the weld metal as an impurity. However, when the content amount of O is excessive, toughness and ductility deteriorate; thus, the upper limit of the O content of the weld metal is set to 0.150% or less.

On the other hand, since an extreme reduction in the content amount of O leads to an increase in manufacturing cost, the lower limit of the O content of the weld metal is set to 0.001% or less.

The lower limit of the O content of the weld metal is preferably 0.002% or 0.003%.

The upper limit of the O content of the weld metal is preferably 0.130% or 0.100%.

### (Balance: Fe and Impurities)

The other balance components among the chemical components of the weld metal are Fe and impurities.

The impurities mean components that are mixed in during industrial manufacturing of the weld metal due to various factors such as raw materials such as ore or scrap, or manufacturing steps and that are acceptable to the extent that they do not give bad influence to the characteristics of the weld metal.

### (Nb, V, Ta, Hf, Ti, and Zr)

The weld metal contains at least one element (hereinafter, simply referred to as a "specific element") selected from the group consisting of Nb, V, Ta, Hf, Ti, and Zr in the following content amounts. By containing specific elements in the following content amounts, carbides can be crystallized in the liquid phase to reduce the C concentration in the liquid phase, and hot cracking can be suppressed:
Nb: more than 1.00%,
V: more than 1.00%,
Ta: 0.001 % or more,
Hf: 0.001 % or more,
Ti: more than 0.10%, and
Zr: more than 0.500%.

### ·Nb: more than 1.00%

In the case where, for the purpose of suppressing hot cracking, Nb is added in order to crystallize carbides in the liquid phase to reduce the C concentration in the liquid phase, the lower limit of Nb content of the weld metal is set to more than 1.00%. The lower limit of Nb content of the weld metal is preferably 1.10%, 1.20%, 1.30%, or 1.50%.

### ·V: more than 1.00%

In the case where, for the purpose of suppressing hot cracking, V is added in order to crystallize carbides in the liquid phase to reduce the C concentration in the liquid phase, the lower limit of V content of the weld metal is set to more than 1.00%. The lower limit of V content of the weld metal is preferably 1.10%, 1.20%, 1.30%, 1.50%, 1.80%, or 2.00%.

### ·Ta: 0.001% or more

In the case where, for the purpose of suppressing hot cracking, Ta is added in order to crystallize carbides in the liquid phase to reduce the C concentration in the liquid phase, the lower limit of Ta content of the weld metal is set to 0.001% or more. The lower limit of Ta content of the weld metal is preferably 0.002%, 0.005%, 0.010%, 0.030%, 0.050%, or 0.060%.

### ·Hf: 0.001% or more

In the case where, for the purpose of suppressing hot cracking, Hf is added in order to crystallize carbides in the liquid phase to reduce the C concentration in the liquid phase, the lower limit of Hf content of the weld metal is set to 0.001% or more. The lower limit of Hf content of the weld metal is preferably 0.002%, 0.005%, 0.010%, 0.030%, 0.040%, 0.050%, or 0.060%.

### ·Ti: more than 0.10%

In the case where, for the purpose of suppressing hot cracking, Ti is added in order to crystallize carbides in the liquid phase to reduce the C concentration in the liquid phase, the lower limit of Ti content of the weld metal is set to more than 0.10%. The lower limit of Ti content of the weld metal is preferably 0.11%, 0.13%, 0.20%, 0.30%, 0.50%, 0.80%, or 1.00%.

### ·Zr: more than 0.500%

In the case where, for the purpose of suppressing hot cracking, Zr is added in order to crystallize carbides in the liquid phase to reduce the C concentration in the liquid phase, the lower limit of Zr content of the weld metal is set to more than 0.500%. The lower limit of Zr content of the weld metal is preferably 0.510%, 0.530%, 0.550%, 0.600%, or 0.630%.

The weld metal preferably contains, among the specific elements, at least one element of Ta or Hf in the following content amounts. By containing at least one of Ta or Hf, which are presumed to have higher carbide forming ability, the formation of carbides is promoted, and as a result hot cracking can be more suppressed.
Ta: 0.001% or more,
Hf: 0.001% or more,

### ·Containing of two or more specific elements

It is preferable to contain two or more elements among the specific elements (that is, elements selected from the group consisting of Nb, V, Ta, Hf, Ti, and Zr) in the above respective content amounts. By containing two or more specific elements, hot cracking in the weld metal is more suppressed.

This is because, by containing two or more specific elements, the formation of carbides is more promoted than in the case where only one element among the specific elements is added in the above content amount. The reason is as follows: in the case where only one element among the specific elements is added, carbides containing the one element are formed; here, since there is equilibrium of reaction, there is a limit to the amount of carbides produced. On the other hand, it is presumed that, by containing two or more specific elements, the activity of the carbide is reduced (the activity of the carbide-forming element is increased) and reaction is promoted.

### (Total of the Mn Content and the Ni Content (Mn + Ni))

Mn and Ni are austenite stabilizing elements, and improve the low-temperature toughness of the weld metal. On the other hand, since Ni is an expensive metal, to improve the low-temperature toughness of the weld metal while suppressing the cost of the weld metal, it is preferable that the total of the Mn content and the Ni content (Mn + Ni) in the weld metal be set to 11.5% or more, more preferably 12.0% or more, 13.0% or more, or 15.0% or more, while the Mn content and the Ni content satisfy the above respective ranges.

When the amount of Mn is excessively increased, the stacking fault energy is reduced, and toughness deteriorates. Thus, from the viewpoint of suppressing the cost of the weld metal and improving the low-temperature toughness of the weld metal, it is preferable that the total of the Mn content and the Ni content (Mn + Ni) in the weld metal be set to 37.0% or less while the Mn content and the Ni content satisfy the above respective ranges.

The total of the Mn content and the Ni content (Mn + Ni) in the weld metal is more preferably 35.0% or less, 32.0% or less, or 30.0% or less.

### (Total of the Mn Content, the Ni Content, and the Cr Content (Mn + Ni + Cr))

Mn, Ni, and Cr are austenite stabilizing elements, and improve the low-temperature toughness of the weld metal. On the other hand, since Ni is an expensive metal, to improve the low-temperature toughness of the weld metal while suppressing the cost of the weld metal, it is preferable that the total of the Mn content, the Ni content, and the Cr content (Mn + Ni + Cr) in the weld metal be set to 15.0% or more while the Mn content, the Ni content, and the Cr content satisfy the above respective ranges.

The total of the Mn content, the Ni content, and the Cr content (Mn + Ni + Cr) in the weld metal is more preferably 17.0% or more, 19.0% or more, 20.0% or more, 22.0% or more, 24.0% or more, 26.0% or more, 28.0% or more, or 30.0% or more.

On the other hand, by the Mn content not being an excessive amount, the stacking fault energy is prevented from being too low, and toughness can be secured. Further, by the Cr content not being an excessive amount, the amount of low-melting-point compounds in the molten metal can be reduced, and expansion of the solid-liquid coexistence temperature range of the molten metal can be suppressed; therefore, the occurrence of hot cracking can be suppressed. Thus, from the viewpoint of reducing the amount of low-melting-point compounds generated in the molten metal and suppressing the occurrence of hot cracking while suppressing the cost of the weld metal and improving the low-temperature toughness of the weld metal, it is preferable that the total of the Mn content, the Ni content, and the Cr content (Mn + Ni + Cr) in the weld metal be set to 47.0% or less while the Mn content, the Ni content, and the Cr content satisfy the above respective ranges.

The total of the Mn content, the Ni content, and the Cr content (Mn + Ni + Cr) in the weld metal is more preferably 45.0% or less, 42.0% or less, or 40.0% or less.

### (Mass Ratio of the Mn Content and the Ni Content (Ni/Mn))

Mn and Ni are austenite stabilizing elements, and improve the low-temperature toughness of the weld metal. On the other hand, Ni is an expensive metal; further, when the amount of Mn is excessively increased, the stacking fault energy is reduced, and toughness deteriorates.

Thus, from the viewpoint of improving the low-temperature toughness of the weld metal while suppressing the cost of the weld metal, the mass ratio of the Mn content and the Ni content (Ni/Mn) in the weld metal is preferably set to 0.33 or more.

The lower limit of the mass ratio of the Mn content and the Ni content (Ni/Mn) in the weld metal is more preferably 0.50, 0.70, 1.00, 1.10, or 1.20.

The upper limit of the mass ratio of the Mn content and the Ni content (Ni/Mn) in the weld metal is preferably 3.80, 3.50, 3.30, or 3.00.

### (fcc Content Ratio Determined by the Magnetic Induction Method)

To enhance the low-temperature toughness in the weld metal, it is preferable to increase the proportion of austenite in the structure of the weld metal. Thus, the fcc content ratio in the weld metal is preferably set to 70 vol% or more. The fcc content ratio is more preferably 80 vol% or more, or 90 vol% or more, and may be 100 vol%. The balance of the structure is bec.

The fcc content ratio in the structure of the weld metal can be determined by the following method.

Samples are taken from the weld metal, then on each sample surface the bcc content ratio (vol%) is measured by the magnetic induction method, and the arithmetic average value of the measured bcc content ratios is determined. Using the obtained average value of the bcc content ratio, the fcc content ratio (vol%) in the structure of the weld metal is determined by the following formula. $fcc content ratio = 100 - bcc content ratio$

The sample from the weld metal is taken such that the base metal is not included in the center position of the weld metal.

### (Tensile Strength)

The tensile strength of the weld metal is preferably set to 590 to 1200 MPa, for example. The tensile strength can be measured by performing a tensile test of the weld metal in accordance with JIS Z3111:2005.

### <A welded Joint and a Welded Structure>

Next, a welded joint and a welded structure according to the present disclosure are described.

A welded joint according to the present disclosure includes the weld metal according to the present disclosure. For example, a welded joint according to the present disclosure includes a steel material as a base metal and a welded portion composed of a weld metal and a heat-affected zone.

Further, a welded structure according to the present disclosure includes the welded joint according to the present disclosure.

Since the welded joint according to the present disclosure includes the weld metal according to the present disclosure, the welded joint is inexpensive and excellent in low-temperature toughness.

Here, a method for manufacturing the welded joint according to the present disclosure will now be described.

The manufacturing method described below is an example, and the method for manufacturing the welded joint according to the present disclosure is not limited to the following method.

The welded joint according to the present disclosure can be manufactured by using a welding material to weld a steel material as a base metal.

For example, a method for manufacturing the welded joint according to the present disclosure is obtained by using a flux-cored wire to perform gas-shielded metal arc welding on a steel material. In this case, the chemical components of the weld metal include components derived from the flux-cored wire, which is a welding material, and the steel material, which is a base metal.

Further, a method for manufacturing the welded joint according to the present disclosure is obtained by using a solid wire and flux to perform submerged arc welding. For example, in submerged arc welding, a common submerged arc welding apparatus in which granular flux is sprayed on a welding line in advance, a solid wire is fed into the flux, and welding is performed by arc heat generated from an arc between the solid wire and the steel material in the flux can be used. In this case, the chemical components of the weld metal include components derived from the solid wire and the flux, which are welding materials, and the steel material, which is a base metal.

Further, a method for manufacturing the welded joint according to the present disclosure is obtained by, for example, a welding method such as shielded metal arc welding, simple electrogas arc welding, electroslag welding, TIG welding, or gas-shielded welding using a solid wire. In this case, the chemical components of the weld metal include components derived from the welding material and the steel material, which is a base metal.

The type of the base metal included in the welded joint according to the present disclosure, that is, the type of the steel material (a material to be welded) used in the above method for manufacturing the welded joint is not particularly limited; for example, Ni-based low-temperature steel having a plate thickness of 20 mm or more and containing 6 to 9% Ni can be suitably used.

### [Examples]

Next, the feasibility and effects of the present disclosure are described in more detail by using Present Disclosure Examples and Comparative Examples; however, the following Examples do not limit the present disclosure, and any design change held fast to the gist of the preceding and following descriptions is included in the technical scope of the present disclosure.

By the methods shown below, weld metals were obtained by submerged arc welding using a solid wire and flux (SAW), shielded metal arc welding using a shielded metal arc welding rod (SMAW), arc welding using a flux-cored wire (flux-cored arc welding, FCAW), and gas arc welding using a filler metal (tungsten inert gas, TIG).

### <1. Submerged Arc Welding Using a Solid Wire and Flux (SAW)>

### (Manufacturing of a Solid Wire)

A solid wire was manufactured by the method described below.

First, steel was melted and then subjected to forging; then, rolling was performed to process the steel into a rod shape, and the rod-shaped steel was drawn; thus, a solid wire was obtained. In this way, a solid wire having a final wire diameter of φ2.4 mm was experimentally produced. After the experimental production, a lubricant was applied to the wire surface.

### (Manufacturing of a Welded Joint)

The obtained solid wire was used to perform welding by submerged arc welding; thus, a welded joint including a weld metal was manufactured. Specifically, submerged arc welding was performed using the solid wire in combination with NITTETSU FLUX 10H manufactured by Nippon Steel Welding & Engineering Co., Ltd., which is flux for submerged arc welding.

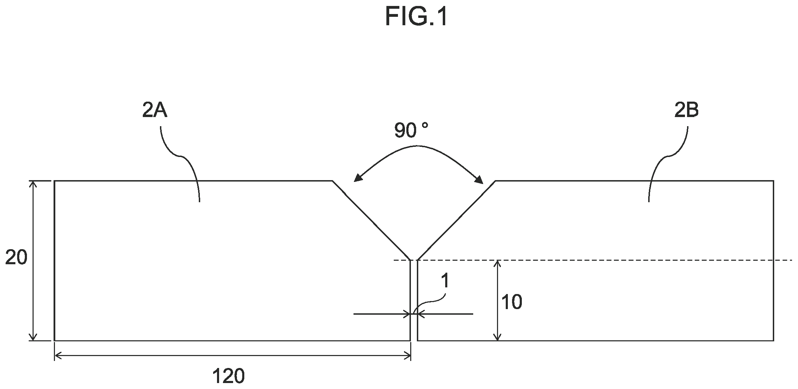

As a steel plate (base metal) to be welded, a steel plate (20 mmt × 120 mmw × 300 mml) of the components shown in Table 1 was used. As shown in Fig. 1, on base metals 2A and 2B, a groove was formed up to half the plate thickness such that the groove angle was 90°. The gap between the base metal 2A and the base metal 2B was adjusted to 1 mm, and the base metals were butted against each other. Single-bead welding was performed on the base metals 2A and 2B. The welding conditions were set to the conditions of "Submerged arc welding (SAW)" shown in Table 2.

In this way, welded joints each including a weld metal were manufactured.

The chemical components of the obtained weld metal were controlled by adjusting the components of the solid wire. The chemical components of the weld metals in the manufactured welded joints are shown in Tables 3-1 to 3-4 (Nos. 1 to 8, 33, 34, and 39).

### <2. Shielded Metal Arc Welding Using a Shielded Metal Arc Welding Rod (SMAW)>

### (Manufacturing of a Shielded Metal Arc Welding Rod)

A shielded metal arc welding rod was manufactured by the method described below.

First, flux was applied to a core wire, and firing was performed in a temperature range of 300 to 500°C for 1 to 3 hours; thus, a shielded metal arc welding rod was experimentally produced. The final welding rod diameter of the obtained shielded metal arc welding rod was φ6.0 mm, and the average thickness of the flux was 1.0 mm.

### (Manufacturing of a Welded Joint)

The obtained shielded metal arc welding rod was used to perform shielded metal arc welding; thus, a welded joint including a weld metal was manufactured.

As a steel plate (base metal) to be welded, a steel plate (20 mmt × 120 mmw × 300 mml) of the components shown in Table 1 was used. As shown in Fig. 1, on base metals 2A and 2B, a groove was formed up to half the plate thickness such that the groove angle was 90°. The gap between the base metal 2A and the base metal 2B was adjusted to 1 mm, and the base metals were butted against each other. Single-bead welding was performed on the base metals 2A and 2B. The welding conditions were set to the conditions of "Shielded metal arc welding (SMAW)" shown in Table 2. In this way, welded joints each including a weld metal were manufactured.

The chemical components of the obtained weld metal were controlled by adjusting the components of the shielded metal arc welding rod. The chemical components of the weld metals in the manufactured welded joints are shown in Tables 3-1 to 3-4 (Nos. 9 to 16, 35, 36, and 40).

### <3. Arc Welding Using a Flux-cored Wire (FCAW)>

### (Manufacturing of a Flux-cored Wire)

A flux-cored wire was manufactured by the method described below.

First, while feeding a steel strip in the longitudinal direction, forming was performed using forming rolls to obtain a U-shaped open tube. Flux was supplied into the open tube through the opening of the open tube, and the facing edge portions of the opening of the open tube were butt-welded to obtain a seamless tube. The seamless tube was drawn to obtain a flux-cored wire having no slit-like gap.

In this way, a flux-cored wire having a final wire diameter of φ1.2 mm was experimentally produced.

In the course of the work of drawing the flux-cored wire, the flux-cored wire was annealed in a temperature range of 650 to 950°C for 4 hours or more. After the experimental production, a lubricant was applied to the wire surface.

### (Manufacturing of a Welded Joint)

The obtained flux-cored wire was used to perform gas-shielded metal arc welding; thus, a welded joint including a weld metal was manufactured.

As a steel plate (base metal) to be welded, a steel plate (20 mmt × 120 mmw × 300 mml) of the components shown in Table 1 was used. As shown in Fig. 1, on base metals 2A and 2B, a groove was formed up to half the plate thickness such that the groove angle was 90°. The gap between the base metal 2A and the base metal 2B was adjusted to 1 mm, and the base metals were butted against each other. Single-bead welding was performed on the base metals 2A and 2B. The welding conditions were set to the conditions of "Flux-cored wire (FCAW)" shown in Table 2. In this way, welded joints each including a weld metal were manufactured.

The chemical components of the obtained weld metal were controlled by adjusting the components of the flux-cored wire. The chemical components of the weld metals in the manufactured welded joints are shown in Tables 3-1 to 3-4 (Nos. 17 to 24, 37, and 41).

### <4. Gas Tungsten Arc Welding Using a Filler Metal (TIG)>

### (Manufacturing of a Filler Metal)

As a filler metal, a solid wire was manufactured by the same manufacturing method as in <1. Submerged arc welding using a solid wire and flux (SAW)>.

### (Manufacturing of a Welded Joint)

The obtained filler metal (solid wire) was used to perform welding by gas tungsten arc welding; thus, a welded joint including a weld metal was manufactured.

As a steel plate (base metal) to be welded, a steel plate (20 mmt × 120 mmw × 300 mml) of the components shown in Table 1 was used. As shown in Fig. 1, on base metals 2A and 2B, a groove was formed up to half the plate thickness such that the groove angle was 90°. The gap between the base metal 2A and the base metal 2B was adjusted to 1 mm, and the base metals were butted against each other. Single-bead welding was performed on the base metals 2A and 2B. The welding conditions were set to the conditions of "Tungsten arc welding (TIG)" shown in Table 2.

In this way, welded joints each including a weld metal were manufactured.

The chemical components of the obtained weld metal were controlled by adjusting the components of the filler metal. The chemical components of the weld metals in the manufactured welded joints are shown in Tables 3-1 to 3-4 (Nos. 25 to 32, 38, and 42).

The unit of the content amount of the chemical component of the weld metal shown in Tables 3-1 to 3-4 is "mass% relative to the total mass of the weld metal".

The balance of the weld metal shown in Tables 3-1 to 3-4 (that is, the components other than the components shown in the tables) is iron and impurities.

In Tables 3-1 to 3-4, the blank in the table regarding the content amount of the chemical component of the weld metal means that the content amount of the chemical component has the number of digits less than the significant digits. These chemical components may be unavoidably mixed in or produced in content amounts having the number of digits less than the significant digits.

For each of the welded joints obtained in Nos. 1 to 42, the fcc content ratio in the structure of the weld metal was determined by the following method.

First, samples were taken from the weld metal. The sample from the weld metal was taken such that the base metal was not included in the center position of the weld metal. On each sample surface, the bcc content ratio (vol%) was measured by the magnetic induction method using FERITSCOPE (registered trademark) FMP30 (manufactured by Fischer Instruments K.K.) and using a probe (FGAB 1.3-Fe) manufactured by Fischer Instruments K.K. as a probe of the measuring instrument.

In order to obtain an accurate measurement value, the position where the probe of FERITSCOPE was applied to the sample was set to the center position of a surface obtained by performing cutting in the direction perpendicular to the bead longitudinal direction of the welded portion, and the probe was applied to as flat a surface as possible. The probe diameter was 7 mm.

The arithmetic average value of the measured bcc content ratios was determined, and the fcc content ratio (vol%) in the structure of the weld metal was determined by the following formula using the obtained average value of the bcc content ratio. $fcc content ratio = 100 - bcc content ratio$

### <Evaluation Test>

### ·FISCO cracking evaluation method

For hot cracking resistance, a FISCO cracking test (JIS Z 3155 (1993): "*C-gata jigu kousoku tsukiawase yousetsu ware shiken hoho"* ("C-shaped jig-restrained butt welding cracking test method") (Method of FISCO test)) was performed, and thereby cracking (hot cracking) during solidification from the liquid phase was evaluated.

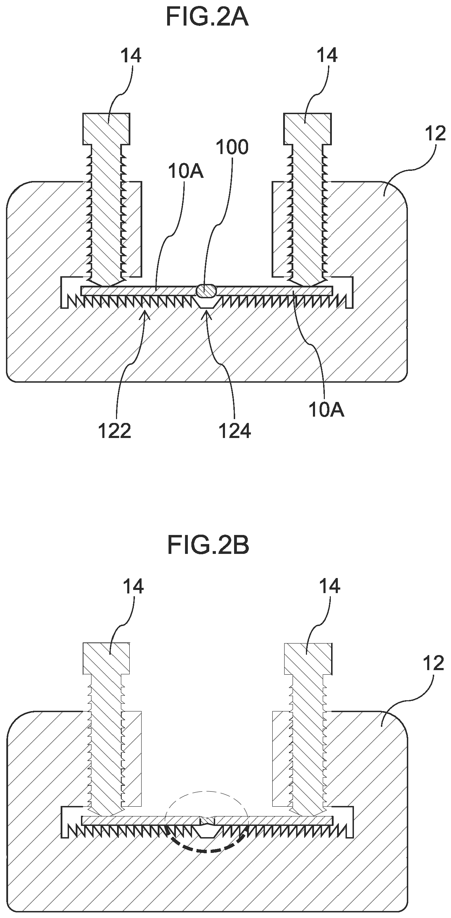

In the FISCO cracking test, first, two steel plates 10A (base metals) were set on a rough surface 122 of a C-shaped jig 12 as shown in Fig. 2A in a state where the steel plates 10A were butted against each other, and their end portions were fixed with fixing bolts 14. The two steel plates 10A are set such that the butt portion is placed above a non-rough surface portion 124 at the center of the rough surface 122. In this state, the butt portion was welded to form a weld metal portion 100. The welding was performed under the conditions described in each of <1. Submerged Arc Welding Using a Solid Wire and Flux (SAW)>, <2. Shielded Metal Arc Welding Using a Shielded Metal Arc Welding Rod (SMAW)>, <3. Arc Welding Using a Flux-cored Wire (FCAW)>, and <4. Gas Tungsten Arc Welding Using a Filler Metal (TIG)> described above.

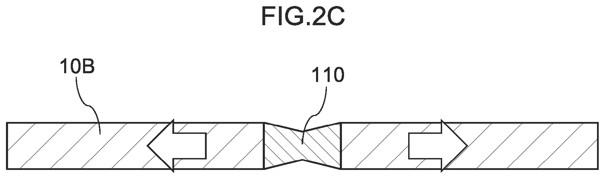

When the weld metal portion 100 solidifies after welding, a hot crack 110 like that shown in Fig. 2B may occur in a part. As shown in Fig. 2C, the hot crack 110 is a crack that occurs due to the fact that tensile stress acts when solidification occurs in the weld metal portion 100.

For the weld metal in the welded joint obtained in each of Nos. 1 to 42, a crack length generated in the weld metal portion was measured.

For the determination of hot cracking, the weld length was denoted by L (mm) and the total crack length in L was denoted by Lc (mm), and the cracking rate R (%) was calculated by the following formula; the case of the cracking rate R ≤ 15% was determined as acceptable, and the case of the cracking rate R > 15% was determined as unacceptable. $R = Lc / L \times 100 \left(%\right)$

**[Table 1]**

| Base metal components (mass%) | | | | | |
|---|---|---|---|---|---|
| C | Si | Mn | P | S | Ni |
| 0.05 | 0.18 | 0.61 | 0.002 | 0.001 | 9.14 |

**[Table 2]**

| Welding conditions | | | | | | |
|---|---|---|---|---|---|---|
| Welding method | Current | Voltage | Speed | Wire feeding speed | Shield gas | Flow rate |
| | A | V | mm/min | mm/min | | L/min |
| Submerged arc welding (SAW) | 360 | 30 | 350 | | | |
| Shielded metal arc welding (SMAW) | 140 | 22 | 160 | | | |
| Flux-cored wire (FCAW) | 200 | 31 | 350 | | **Ar** + 20%CO2 | 25 |
| Tungsten arc welding (TIG) | 160 | 10 | 100 | 60 | Ar | 15 |

**[Table 3-1]**

| No. | C | Si | Mn | P | S | Cu | Ni | Cr | Mo | Nb | V | Ta | Hf | Ti | Zr | Co | Pb |
|---|---|---|---|---|---|---|---|---|---|---|---|---|---|---|---|---|---|
| 1 | 0.39 | 0.50 | 11.1 | 0.006 | 0.003 | | 7.5 | 2.2 | 3.9 | | 1.10 | | | | | | |
| 2 | 0.52 | 0.21 | 10.8 | 0.012 | 0.008 | | 14.5 | 1.0 | 4.2 | 1.20 | | | | | | | |
| 3 | 0.40 | 0.27 | 5.9 | 0.018 | 0.008 | 0.2 | 18.6 | 5.4 | 2.1 | | | | | | 0.530 | 0.3 | |
| 4 | 0.34 | 0.50 | 14.0 | 0.010 | 0.009 | | 7.6 | 8.4 | 3.9 | | | | 0.080 | | | | 0.2 |
| 5 | 0.63 | 0.30 | 12.1 | 0.018 | 0.021 | | 14.2 | 3.4 | 2.7 | | | | | 0.11 | | | |
| 6 | 0.38 | 0.49 | 11.0 | 0.003 | 0.005 | | 11.4 | 4.1 | 3.7 | | | 0.061 | | | | 0.1 | 0.1 |
| 7 | 0.40 | 0.36 | 8.9 | 0.015 | 0.005 | | 11.7 | 6.5 | 2.6 | | | | | 0.51 | | | |
| 8 | 0.69 | 0.25 | 17.8 | 0.023 | 0.008 | | 8.4 | 8.3 | 3.7 | | 1.20 | 0.003 | | | | | |
| 9 | 0.29 | 0.28 | 8.8 | 0.028 | 0.001 | | 9.6 | 7.2 | 5.2 | | | 0.070 | | | | | |
| 10 | 0.62 | 0.37 | 13.6 | 0.007 | 0.021 | | 13.8 | 1.5 | 0.4 | | | | 0.010 | | | | |
| 11 | 0.39 | 0.29 | 8.4 | 0.005 | 0.020 | | 14.8 | 7.2 | 2.7 | | | | | 0.34 | | | |
| 12 | 0.46 | 0.29 | 16.6 | 0.028 | 0.014 | | 14.0 | 1.4 | 4.6 | | 2.10 | | | | | | |
| 13 | 0.70 | 0.07 | 14.7 | 0.006 | 0.018 | | 12.3 | 5.6 | 2.7 | 1.30 | | | | | | | |
| 14 | 0.48 | 0.12 | 13.9 | 0.017 | 0.025 | | 7.0 | 6.1 | 1.4 | | 1.80 | | | 0.14 | | | |
| 15 | 0.53 | 0.28 | 7.7 | 0.017 | 0.001 | | 18.6 | 6.5 | 4.0 | | | 0.003 | 0.002 | | | | |
| 16 | 0.34 | 0.26 | 10.5 | 0.007 | 0.009 | | 11.7 | 6.9 | 3.6 | | | | | | 0.940 | | |
| 17 | 0.41 | 0.15 | 9.4 | 0.017 | 0.026 | | 12.8 | 6.0 | 2.8 | 0.01 | 0.01 | | | 0.81 | | | |
| 18 | 0.24 | 0.43 | 18.4 | 0.002 | 0.029 | | 17.3 | 8.2 | 4.3 | 0.02 | 0.01 | | 0.002 | 0.03 | | | 0.1 |
| 19 | 0.23 | 0.21 | 17.3 | 0.010 | 0.007 | | 17.8 | 5.3 | 1.0 | 0.02 | 0.02 | 0.010 | | 0.03 | 0.510 | 0.1 | |
| 20 | 0.28 | 0.10 | 14.8 | 0.020 | 0.023 | | 9.5 | 4.6 | 7.1 | 0.02 | 0.01 | 0.090 | | 0.01 | | | |
| 21 | 0.72 | 0.36 | 12.8 | 0.006 | 0.019 | | 13.0 | 6.9 | 2.0 | 2.10 | 0.01 | | | 0.05 | | | |

**[Table 3-2]**

| No. | Mg | Al | Ca | B | REMs | N | O | FCC | Ni/Mn | Cracking rate | Welding method | Notes |
|---|---|---|---|---|---|---|---|---|---|---|---|---|
| 1 | | 0.021 | | | | 0.027 | 0.024 | 100 | 0.68 | 4 | SAW | Present Invention Example |
| 2 | 0.01 | 0.041 | | | 0.001 | 0.011 | 0.026 | 100 | 1.34 | 0 | SAW | Present Invention Example |
| 3 | | 0.047 | | 0.001 | | 0 | 0.028 | 100 | 3.15 | 0 | SAW | Present Invention Example |
| 4 | | 0.041 | | | | 0.023 | 0.019 | 100 | 0.54 | 9 | SAW | Present Invention Example |
| 5 | | 0.021 | 0.05 | | | 0.001 | 0.030 | 100 | 1.17 | 5 | SAW | Present Invention Example |
| 6 | | 0.038 | | | | 0.059 | 0.024 | 100 | 1.04 | 3 | SAW | Present Invention Example |
| 7 | | 0.027 | | | | 0.054 | 0.026 | 100 | 1.31 | 0 | SAW | Present Invention Example |
| 8 | 0.01 | 0.037 | | | | 0.034 | 0.018 | 100 | 0.47 | 7 | SAW | Present Invention Example |
| 9 | 0.02 | 0.034 | | 0.001 | | 0.031 | 0.021 | 100 | 1.09 | 5 | SMAW | Present Invention Example |
| 10 | | 0.019 | 0.05 | | | 0.021 | 0.029 | 100 | 1.01 | 6 | SMAW | Present Invention Example |
| 11 | | 0.017 | | | | 0.017 | 0.035 | 100 | 1.76 | 2 | SMAW | Present Invention Example |
| 12 | 0.02 | 0.018 | | 0.001 | | 0.020 | 0.034 | 100 | 0.84 | 1 | SMAW | Present Invention Example |
| 13 | | 0.021 | | | 0.001 | 0.080 | 0.027 | 100 | 0.84 | 5 | SMAW | Present Invention Example |
| 14 | | 0.030 | | | | 0.054 | 0.028 | 100 | 0.50 | 8 | SMAW | Present Invention Example |
| 15 | 0.05 | 0.031 | | | | 0.040 | 0.029 | 100 | 2.42 | 0 | SMAW | Present Invention Example |
| 16 | | 0.009 | | | | 0.031 | 0.033 | 100 | 1.11 | 0 | SMAW | Present Invention Example |
| 17 | | 0.050 | | | | 0.041 | 0.047 | 100 | 1.36 | 0 | FCAW | Present Invention Example |
| 18 | 0.01 | 0.011 | | | | 0.007 | 0.055 | 100 | 0.94 | 7 | FCAW | Present Invention Example |
| 19 | | 0.015 | | | 0.002 | 0.004 | 0.080 | 100 | 1.03 | 6 | FCAW | Present Invention Example |
| 20 | | 0.017 | 0.05 | | | 0.066 | 0.042 | 100 | 0.64 | 4 | FCAW | Present Invention Example |
| 21 | 0.05 | 0.024 | | 0.001 | | 0.016 | 0.057 | 100 | 1.02 | 9 | FCAW | Present Invention Example |

**[Table 3-3]**

| No. | C | Si | Mn | P | S | Cu | Ni | Cr | Mo | Nb | V | Ta | Hf | Ti | Zr | Co | Pb |
|---|---|---|---|---|---|---|---|---|---|---|---|---|---|---|---|---|---|
| 22 | 0.47 | 0.20 | 19.2 | 0.008 | 0.019 | 0.2 | 10.0 | 9.0 | 1.3 | 0.03 | 1.50 | | | 0.04 | | | |
| 23 | 0.43 | 0.49 | 14.5 | 0.012 | 0.015 | | 15.3 | 3.7 | 2.3 | 0.01 | 0.01 | | 0.090 | 0.02 | 0.640 | | |
| 24 | 0.51 | 0.22 | 16.5 | 0.024 | 0.019 | | 8.0 | 3.9 | 1.5 | 0.01 | 0.01 | | | 1.10 | | | |
| 25 | 0.40 | 0.49 | 7.1 | 0.007 | 0.011 | | 9.7 | 7.7 | 4.6 | 1.50 | | | | | | | |
| 26 | 0.80 | 0.17 | 18.7 | 0.017 | 0.014 | | 11.5 | 3.5 | 7.9 | | 2.80 | | | | | 0.1 | |
| 27 | 0.24 | 0.30 | 6.4 | 0.016 | 0.001 | | 8.1 | 2.3 | 0.9 | 1.10 | | | | | 0.940 | | |
| 28 | 0.65 | 0.49 | 19.8 | 0.005 | 0.010 | 0.1 | 9.1 | 6.4 | 9.8 | | | 0.050 | | | | | |
| 29 | 0.53 | 0.09 | 19.6 | 0.003 | 0.008 | | 7.3 | 2.0 | 1.4 | | | | | | 0.940 | | |
| 30 | 0.37 | 0.21 | 10.7 | 0.024 | 0.006 | | 10.2 | 1.0 | 6.3 | | | | | 1.40 | | | |
| 31 | 0.40 | 0.13 | 11.5 | 0.003 | 0.009 | | 12.3 | 6.7 | 2.3 | | | | | 0.68 | | | |
| 32 | 0.47 | 0.09 | 17.3 | 0.008 | 0.025 | | 17.2 | 7.2 | 6.8 | | | | 0.040 | | | | |
| 33 | 0.45 | 0.44 | 13.4 | 0.006 | 0.003 | | 8.4 | 4.1 | 2.3 | | | | | | 4.600 | | |
| 34 | 0.34 | 0.15 | 5.6 | 0.007 | 0.005 | 0.2 | 17.4 | 1.5 | 3.4 | | | 4.900 | | | | 0.1 | |
| 35 | 0.44 | 0.22 | 5.9 | 0.006 | 0.008 | 0.1 | 18.6 | 5.4 | 2.1 | | 4.50 | | | | | | |
| 36 | 0.39 | 0.37 | 15.1 | 0.006 | 0.009 | | 11.6 | 1.4 | 1.5 | 4.70 | | | | | | | |
| 37 | 0.57 | 0.38 | 11.6 | 0.004 | 0.006 | | 13.4 | 1.6 | 1.3 | 0.01 | 0.01 | | | 4.800 | | | |
| 38 | 0.61 | 0.33 | 13.6 | 0.005 | 0.009 | | 18.9 | 2.4 | 2.8 | | | | 3.900 | | | | |
| 39 | 0.48 | 0.31 | 19.0 | 0.006 | 0.016 | | 12.7 | 3.1 | 4.1 | 0.10 | | | | | | | |
| 40 | 0.39 | 0.37 | 15.5 | 0.029 | 0.017 | | 15.8 | 6.4 | 1.1 | | | | | | | | |
| 41 | 0.77 | 0.40 | 18.5 | 0.021 | 0.030 | | 10.8 | 7.1 | 0.8 | | | | | 0.02 | | | |
| 42 | 0.63 | 0.42 | 11.1 | 0.021 | 0.019 | | 18.1 | 4.8 | 2.1 | | | | | | | | |

| No. | Mg | Al | Ca | B | REMs | N | O | FCC | Ni/Mn | Cracking rate | Welding method | Notes |
|---|---|---|---|---|---|---|---|---|---|---|---|---|
| 22 | | 0.034 | | | | 0.033 | 0.041 | 100 | 0.52 | 1 | FCAW | Present Invention Example |
| 23 | | 0.024 | | | | 0.031 | 0.051 | 100 | 1.06 | 1 | FCAW | Present Invention Example |
| 24 | 0.10 | 0.027 | | | | 0.056 | 0.047 | 100 | 0.48 | 0 | FCAW | Present Invention Example |
| 25 | | 0.031 | 0.05 | | | 0.023 | 0.001 | 100 | 1.37 | 0 | TIG | Present Invention Example |
| 26 | | 0.002 | | | | 0.050 | 0.002 | 100 | 0.61 | 6 | TIG | Present Invention Example |
| 27 | 0.03 | 0.001 | | 0.002 | | 0.033 | 0.002 | 100 | 1.27 | 0 | TIG | Present Invention Example |
| 28 | 0.08 | 0.016 | | | | 0.040 | 0.001 | 100 | 0.46 | 1 | TIG | Present Invention Example |
| 29 | | 0.011 | | | 0.002 | 0.029 | 0.001 | 100 | 0.37 | 4 | TIG | Present Invention Example |
| 30 | | 0.010 | | | | 0.014 | 0.002 | 100 | 0.95 | 6 | TIG | Present Invention Example |
| 31 | | 0.001 | | | | 0.036 | 0.003 | 100 | 1.07 | 0 | TIG | Present Invention Example |
| 32 | 0.10 | 0.010 | | | | 0.031 | 0.002 | 100 | 0.99 | 6 | TIG | Present Invention Example |
| 33 | | 0.060 | | | | 0.024 | 0.026 | 100 | 0.63 | 0 | SAW | Present Invention Example |
| 34 | | 0.050 | | | | 0.015 | 0.028 | 100 | 3.11 | 0 | SAW | Present Invention Example |
| 35 | | 0.030 | | | | 0.025 | 0.029 | 100 | 3.15 | 0 | SMAW | Present Invention Example |
| 36 | | 0.070 | | | | 0.028 | 0.031 | 100 | 0.77 | 0 | SMAW | Present Invention Example |
| 37 | | 0.060 | | | | 0.030 | 0.034 | 100 | 1.16 | 0 | FCAW | Present Invention Example |
| 38 | 0.1 | 0.040 | | | 0.002 | 0.006 | 0.002 | 100 | 1.39 | 0 | TIG | Present Invention Example |
| 39 | | 0.017 | | | | 0.044 | 0.025 | 100 | 0.67 | 35 | SAW | Comparative Example |
| 40 | | 0.012 | | | | 0.024 | 0.031 | 100 | 1.02 | 36 | SMAW | Comparative Example |
| 41 | | 0.016 | | | | 0.031 | 0.055 | 100 | 0.58 | 31 | FCAW | Comparative Example |
| 42 | | 0.045 | | | | 0.033 | 0.002 | 100 | 1.63 | 41 | TIG | Comparative Example |

From the results shown in Tables 3-1 to 3-4, it is found that the weld metals of the Present Disclosure Examples are excellent in hot cracking resistance.

On the other hand, the weld metals of the Comparative Examples, which do not contain the elements of Nb, V, Ta, Hf, Ti, and Zr in the content amounts described above, are determined as unacceptable in the FISCO cracking evaluation.

Note that the entire disclosure of Japanese Patent Application No. 2023-204166 is incorporated into the present specification by reference.

All the literatures, patent applications, and technical standards mentioned in the present specification are incorporated into the present specification by reference to the same degree as when it is specifically and individually mentioned that each of the literatures, patent applications, and technical standards is incorporated by reference.

### Description of Reference Signs

- 2A, 2B: base metal
- 10A: steel plate (base metal)
- 10B: welded joint sample
- 12: C-shaped jig
- 14: fixing bolt
- 100: weld metal portion
- 110: hot crack
- 122: rough surface
- 124: non-rough surface portion

## Claims

1. A weld metal comprising chemical components of, in terms of mass% relative to a total mass of the weld metal:
C: from 0.20 to 0.80%,
Si: from 0.03 to 0.50%,
Mn: from 5.1 to 20.0%,
P: from 0 to 0.050%,
S: from 0 to 0.050%,
Cu: from 0 to 5.0%,
Ni: from 6.0 to 20.0%,
Cr: from 0 to 10.0%,
Mo: from 0 to 10.0%,
Nb: from 0 to 5.00%,
V: from 0 to 5.00%,
Ta: from 0 to 5.000%,
Hf: from 0 to 5.000%,
Ti: from 0 to 5.00%,
Zr: from 0 to 5.000%,
Co: from 0 to 1.0%,
Pb: from 0 to 1.0%,
Sn: from 0 to 1.0%,
W: from 0 to 5.0%,
Mg: from 0 to 0.10%,
Al: from 0.001 to 0.100%,
Ca: from 0 to 5.00%,
B: from 0 to 0.500%,
REMs: from 0 to 0.500%,
N: from 0 to 0.500%,
O: from 0.001 to 0.150%, and
a balance being Fe and impurities,
wherein at least one element selected from the group consisting of Nb, V, Ta, Hf, Ti, and Zr is included in the following content amounts:
Nb: more than 1.00%,
V: more than 1.00%,
Ta: 0.001% or more,
Hf: 0.001% or more,
Ti: more than 0.10%, and
Zr: more than 0.500%.

2. The weld metal according to claim 1, wherein a mass ratio of a content amount of the Mn and a content amount of the Ni (Ni/Mn) is 0.33 or more.

3. The weld metal according to claim 1, wherein at least two elements selected from the group consisting of Nb, V, Ta, Hf, Ti, and Zr are included in the respective content amounts.

4. The weld metal according to claim 1, wherein an fcc content ratio determined by a magnetic induction method is 70 vol% or more.

5. A welded joint comprising the weld metal according to any one of claims 1 to 4.

6. A welded structure comprising the welded joint according to claim 5.
